# EUROPEAN PATENT APPLICATION

(11) **EP 4 585 964 A1**
(43) Date of publication of application: **16.07.2025**
(21) Application number: 24151357.1
(22) Date of filing: 11.01.2024
(51) Int. Cl.: G01S 7/48, B60W 60/00, G01S 17/89, G01S 17/931, G01S 17/87, G05D 1/242, G05D 1/246, G05D 1/249, G05D 1/43

(54) **STEERING AUTOMATED VEHICLES BASED ON TRAJECTORIES PLANNED FROM OCCUPANCY GRIDS OBTAINED BY BACKTRACING LIDAR RAYS**

(71) Applicant: embotech AG, 8005 Zürich (CH)
(72) Inventor: HAMPP, Elias Lukas, 8005 Zurich (CH); MAUDERLI, David, 8005 Zurich (CH); HEILMEIER, Alexander, 8005 Zurich (CH); DOMAHIDI, Alexander, 8005 Zürich (CH); LONGO, Stefano, 8005 Zürich (CH)
(74) Representative: E. Blum & Co. AG

(57) **Abstract**

The invention is notably directed to a computer-implemented method of steering an automated vehicle on a ground of a designated area using a set of one or more offboard sensors (110), each being a 3D laser scanning Lidar. The method comprises repeatedly executing algorithmic iterations. Each iteration of the algorithmic iterations comprises obtaining, for each sensor of the one or more offboard sensors, a grid, which is a 2D occupancy grid of cells reflecting a perception of said each sensor. This is achieved by first accessing a dataset capturing a point cloud model of an environment of said each sensor and processing the dataset to identify characteristics of rays (*Rᵢ*) emitted by said each sensor, the characteristics including hit points (*HPᵢ*) of the rays, as well as projections of the hit points and the rays on a plane (*G*) corresponding to the ground. The grid is populated by determining a state of each cell (*Cⱼ*) of the cells based on the identified characteristics, whereby, given a first height (*h*₁) above the plane and a second height (*h*₂) above the first height, a necessary and sufficient condition for said each cell to be in an occupied state is to be matched by a projection of a hit point located above the first height, and a necessary condition for said each cell to be in a free state is to be crossed by a projection of an overhanging ray that has dropped below the second height when passing over said each cell. Eventually, a vehicle trajectory is determined based on the grid obtained for said each sensor and the trajectory is forwarded to a drive-by-wire system of the automated vehicle. The invention is further directed to related systems and computer program products.

## Description

### TECHNICAL FIELD

The invention relates in general to methods of steering automated vehicles using a set of offboard perception sensors, as well as related computerized systems and computer program products. In particular, it is directed to a method that generates 2D occupancy grids of cells reflecting perceptions from 3D laser scanning Lidars by backtracing rays emitted by each Lidar, to accordingly determine a vehicle trajectory. The latter is eventually forwarded to a drive-by-wire system of an automated vehicle, with a view to steering this vehicle in the designated area.

### BACKGROUND

Self-driving vehicles (also known as autonomous vehicles or driverless vehicles) are vehicles that are capable of traveling with little, or even without, human inputs. Such vehicles use sensors (e.g., lidars, cameras, radars, sonars, GPS, and inertial measurement units) to perceive their surroundings. Likewise, automated vehicles may, in principle, be steered based on signals obtained from offboard sensors (i.e., external sensors, which are not in the vehicle). In both cases, sensory information is used to create a model of the vehicle's surroundings, such that this model can be used to generate a navigation path for the vehicle.

Motion prediction is a necessary part of self-driving applications that employ predictive planning techniques. Steering a vehicle based on perception signals obtained from offboard sensors requires frequent and multiple computations. I.e., each offboard sensor produces signals that must be interpreted and processed with a view to determining and updating trajectories for the vehicle and, this, at frequencies that typically are on the order of 5 to 20 hertz. It is desired to efficiently model and update the perceptions of such sensors at a rate compatible with such frequencies, to be able to safely determine or update vehicle trajectories.

### SUMMARY

According to a first aspect, the invention is embodied as a computer-implemented method of steering an automated vehicle on a ground of a designated area using a set of one or more offboard sensors. Each of these sensors is a 3D laser scanning Lidar, e.g., an infrastructure-based Lidar. The method comprises repeatedly executing algorithmic iterations, where each iteration comprises obtaining an occupancy grid, accordingly determining a trajectory for the automated vehicle, and eventually forwarding the determined trajectory to the vehicle, with a view to steering the vehicle in the designated area. In detail, a grid is obtained for each sensor of the one or more offboard sensors, at each iteration. This grid is a 2D occupancy grid of cells reflecting a perception of each sensor. The grid is obtained by: (i) accessing a dataset capturing a point cloud model of an environment of each sensor; and (ii) processing the dataset accessed to identify characteristics of rays emitted by each sensor. Such characteristics include hit points of the rays, as well as projections of the hit points and projections of the rays on a plane corresponding to the ground of the designated area. The grid can then be populated by determining a state of each cell based on the identified characteristics.

The states of the cells are determined by assessing whether certain conditions are met, using a first height, which is defined above the plane, and a second height, which is defined above the first height. For example, the first height is between 3 and 8 cm (it is preferably equal to 5 cm), while the second height is between 12 and 30 cm (it is preferably equal to 20 cm). Each of the first height and the second height is measured with respect to the plane corresponding to the ground. The conditions are the following. A necessary and sufficient condition for each cell to be in an occupied state is to be matched by a projection of a hit point located above the first height, while a necessary condition for each cell to be in a free state is to be crossed by a projection of an overhanging ray that has dropped below the second height when passing over each cell. Eventually, a trajectory is determined (or updated) for the automated vehicle, based on the grid obtained for each sensor. The determined trajectory is then forwarded to a drive-by-wire system of the automated vehicle.

The algorithmic iterations are preferably executed at an average frequency that is between 5 and 20 hertz, and more preferably equal to 10 hertz. Such frequencies call for efficient computations. Now, an advantage of the present approach is that trajectories are determined on mere 2D grids (instead of 2.5 or 3D grids), which already simplifies the calculations. Another advantage is that the above conditions allow the states of several cells to be determined at once, because several cells can be crossed by a same ray projection. I.e., backtracing each ray makes it possible to determine the states of all cells that happen to be crossed by the projection of each overhanging ray. Thus, exploiting ray projections are proposed herein speeds up the determination of the cell states, which, in turn, speeds up the determination of the trajectories. The proposed approach is thus compatible with frequencies such as mentioned above.

In preferred embodiments, the grid obtained for each sensor at each iteration is defined as a polar grid. I.e., the grid is defined according to a polar coordinate system, a pole of which corresponds to a location of each sensor. Each cell is defined by a given radius and a given azimuth. At determining the states of the cells, a further condition is applied to each cell for it to be in a free state, should this cell be an outer cell on a same azimuth and at a larger radius than an inner cell that is matched by a projection of an inner hit point of a reference ray. According to this further condition, no overhanging ray is allowed to set this outer cell in a free state if this overhanging ray has already passed below the inner hit point when passing over the outer cell. This additional condition reduces the likelihood that cells within a vehicle's area will be marked as free.

A possible practical implementation relies on elevation angles of the rays. In that case, the identified characteristics further include such elevation angles. The further condition can be enforced by comparing an elevation angle of the overhanging ray with an elevation angle of the reference ray. The elevation angle of the overhanging ray must be larger than the elevation angle of the reference ray to be allowed to set the outer cell in a free state. Such an implementation is particularly efficient because any valid hit point sets the minimal elevation required for all outer cells.

In embodiments, each cell can have one of three states, i.e., a free state, an occupied state, or an unknown state. In this case, the step of obtaining the grid for each sensor advantageously comprises initializing each of the cells to the unknown state. Then, determining the state of each cell comprises iterating over each ray of the rays identified as parts of the identified characteristics to infer a state of each of the cells that is impacted by this ray. As a result of this initialization procedure, cells that are not determined to be in a free state or an occupied state remain in the unknown state, by default. Still, such states can be later be refined, thanks to simple inference mechanisms.

In embodiments, the set of one or more offboard sensors comprises *N* sensors, where *N* ≥ 2. The sensors are located at distinct positions in the designated area. Thus, *N* grids are obtained, which respectively correspond to the *N* sensors. The sensors are located so that the obtained grids overlap at least partly. The step of determining the trajectory further comprises fusing data from the *N* grids obtained. Eventually, the trajectory is determined (or updated) based on the fused data and this, at each iteration. Fusing data help achieve a more complete, consistent, and accurate representation of the designated area, or portions thereof.

In embodiments, the method further comprises, prior to fusing the data, converting each of the *N* polar grids into a cartesian grid. The cartesian grids obtained are defined in a cartesian coordinate system and have rectangular cells. The converted grids are defined so that at least some of the rectangular cells of any of the *N* grids coincide with cells of a distinct one of the *N* grids. A Lidar implementation lends itself well to determining 2D grids in polar coordinate systems. However, such a coordinate system makes it complicated to reconcile overlapping 2D grids. Converting the polar grids into overlapping Cartesian grids (where some of the cells coincide) makes it easier to subsequently fuse the cell data.

As said, several sensor datasets need to be repeatedly processed at a fairly high frequency. This translates into high throughput and compute requirements, which are difficult to meet, particularly with a secure computing system. To address this problem, the present methods may advantageously rely on a scalable computer architecture, which allows the above requirements to be met, irrespective of the redundancy level desired (the processing systems can be redundant, for safety reasons). Namely, several processing devices are provided to handle sensor datasets from respective, distinct subsets of the perception sensors, to allow more tractable computations.

In detail, in embodiments, the *N* grids are obtained by dispatching sensor data to *K* processing systems, whereby each processing system *k* of the *K* processing systems receives *Nₖ* datasets of the sensor data as obtained from *Nₖ* respective sensors of the set of *N* offboard sensors, where *k* = 1 to *K, K* ≥ 2*, Nₖ* ≥ 2 b' *k,* and *N =* Σ*ₖ Nₖ.* The *Nₖ* datasets are processed at each processing system *k* to obtain *Mₖ* occupancy grids, which correspond to perceptions from *Mₖ* respective sensors of the offboard sensors, respectively, where *Nₖ* ≥ *Mₖ* ≥ 1. The *Mₖ* occupancy grids overlap at least partly.

The data are preferably fused in two steps, during each iteration. Each processing system *k* first fuses data from the *Mₖ* occupancy grids obtained to form a fused occupancy grid. Thus, *K* fused occupancy grids are formed by the *K* processing systems, respectively. The *K* fused occupancy grids are then forwarded to a further processing system, where the *K* fused occupancy grids are merged to obtain a global occupancy grid for the designated area. In other words, the processing systems produce occupancy grids which are pre-fused (locally, at the level of the *K* processing systems), before being merged by a distinct processing system, which relies on distinct (sets of) processors. Performing the prefusion at the level of the *K* processing systems makes it possible to save bandwidth. The trajectories can then be computed (e.g., by the further processing system or one or more additional processing systems) according to any known, suitable trajectory planning scheme.

In embodiments, the *Nₖ* datasets received at each iteration by each processing system *k* are respectively associated with *Nₖ* first timestamps. Each iteration further comprises assigning *K* second timestamps to the *K* fused occupancy grids, where each of the *K* second timestamps is equal to an oldest of the *Nₖ* first timestamps associated with the *Nₖ* datasets as processed at each processing system *k*. And each iteration further comprises assigning a global timestamp to the global occupancy grid, where the global timestamp is obtained as an oldest of the *K* second timestamps. Eventually, the trajectory is determined in accordance with the global timestamp. The above timestamp assignment scheme provides a simple way to track the timing of perception measurements and ensure that the trajectory (as calculated downstream) is not based on data that is too old.

In particular, such a timestamp management makes it possible to discard any dataset that is too old from the occupancy grid calculation. I.e., in embodiments, processing the *Nₖ* datasets further comprises discarding any of the *Nₖ* datasets that is older than a reference time for the *Nₖ* datasets by more than a predefined time period, where the time period is preferably equal to 150 ms. Thus, *Mₖ* is at most equal to *Nₖ.* The reference time is computed as an average of the *Nₖ* timestamps.

The sensors are typically infrastructure-based sensors. In particularly preferred embodiments, each of the sensors is configured to scan its surroundings by emitting rays at constant angles. I.e., such angles can be regarded as being constant in an elevation plane that is transverse to said plane and is rotated by the sensor upon scanning. The constant angles are separated by at most one degree of angle in the elevation plane. As a whole, the constant angles preferably span a range of at least 30 degrees of angle in this elevation plane.

In embodiments, at least one of the sensors, or preferably each of the sensors, is located at a height that is between 1.9 m and 5 m, more preferably between 1.9 m and 3 m. This height is measured with respect to said plane. The higher the Lidar, the larger the area covered and the less it gives rise to shadows (occlusions). However, the higher the Lidar, the lower the resolution. The preferred heights mentioned above give rise to a satisfactory trade-off.

According to another aspect, the invention is embodied as a computer program product for steering an automated vehicle in a designated area. The computer program product comprises a computer readable storage medium having program instructions embodied therewith. Such program instructions are executable by processing means of a computerized system, to cause the computerized system to repeatedly execute several algorithmic iterations as described above, consistently with the present methods.

According to a final aspect, the invention is embodied as a system for steering an automated vehicle in a designated area. The system comprises a set of one or more offboard sensors (each being a 3D laser scanning Lidar) and one or more processing systems. The latter are configured to repeatedly execute algorithmic iterations. In operation, each iteration of the algorithmic iterations is executed so as perform steps as described above in respect of the present methods.

### BRIEF DESCRIPTION OF THE DRAWINGS

These and other objects, features and advantages of the present invention will become apparent from the following description, which is to be read in connection with the accompanying drawings. The illustrations are for clarity in facilitating one skilled in the art in understanding the invention in conjunction with the detailed description. In the drawings:
FIG. 1 is a diagram schematically illustrating high-level features of the proposed approach, whereby sensor datasets obtained from different Lidars are separately processed at distinct processing systems, pre-fused by such systems, and sent to a further processing system for it to merge the fused grids, based on which vehicle trajectories are then obtained, as in embodiments;
FIG. 2A is a flowchart illustrating high-level steps of a method of steering an automated vehicle, according to embodiments. FIG. 2B shows details of step S30 of FIG. 2A, in accordance with embodiments;
FIG. 3 is a diagram illustrating overlapping occupancy grids, which are pre-fused by distinct processing systems, before being forwarded to a further processing system for it to merge the fused grids, as in embodiments;
FIG. 4 is a table illustrating how use can be made of cell histories to infer states of occluded cells, as in embodiments;
FIG. 5 shows a global 2D occupancy grid generated at a given time point, as in embodiments. In this example, the grid shows a representation of the surroundings of a given automated car (the ego vehicle);
FIG. 6 schematically represents a top view of an industrial parking lot, where use is made of perception signals obtained from infrastructure-based Lidars to determine (and repeatedly update) a trajectory for an automated car in the parking lot, as in embodiments.
FIG. 7 illustrates the geometry of a ray emitted by a 3D laser scanning Lidar in an elevation plane, which is transverse to a reference plane corresponding to the ground level of a designated area, as in embodiments. The elevation plane corresponds to a given azimuth and contains the emitted ray;
FIGS. 8A to 8C show several rays emitted by a 3D laser scanning Lidar in a given elevation plane, as well as hit points of such rays. FIGS. 8A- 8C illustrate how the states of cells of an occupancy grid are determined by examining whether certain conditions are met, using a first threshold height defined above the plane and a second threshold height defined above the first threshold height, as in embodiments. The cells shown correspond to cells extending along a given radius, for a given azimuth; and
FIG. 9A shows a polar grid, i.e., a grid defined according to a polar coordinate system, whereas FIG. 9B shows a corresponding Cartesian grid, i.e., a grid defined in a Cartesian coordinate system, after conversion, as involved in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Computerized systems, methods, and computer program products, embodying the present invention will now be described, by way of non-limiting examples.

### DETAILED DESCRIPTION OF EMBODIMENTS OF THE INVENTION

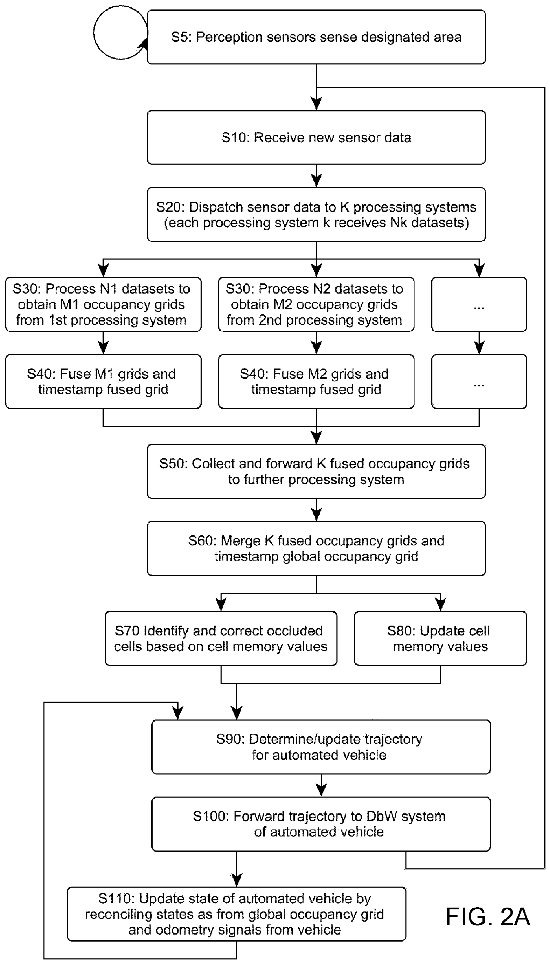

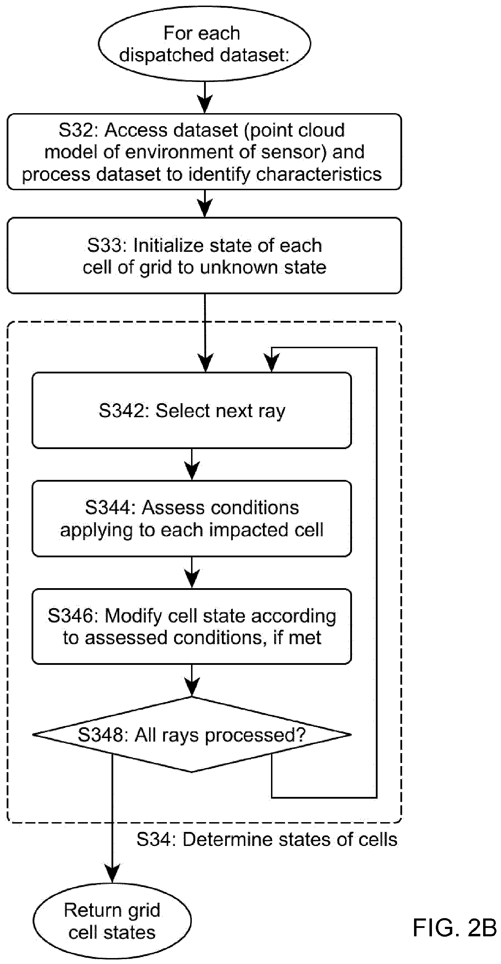

The following description is structured as follows. General embodiments and high-level variants are described in section 1. Section 2 addresses particularly preferred embodiments. Section 3 concerns technical implementation details. Note, the present method and its variants are collectively referred to as the "present methods". All references Sn refer to methods steps of the flowcharts of FIGS. 2A and 2B, while other references pertain to devices, components, and concepts involved in embodiments of the present invention.

### 1. General embodiments and high-level variants

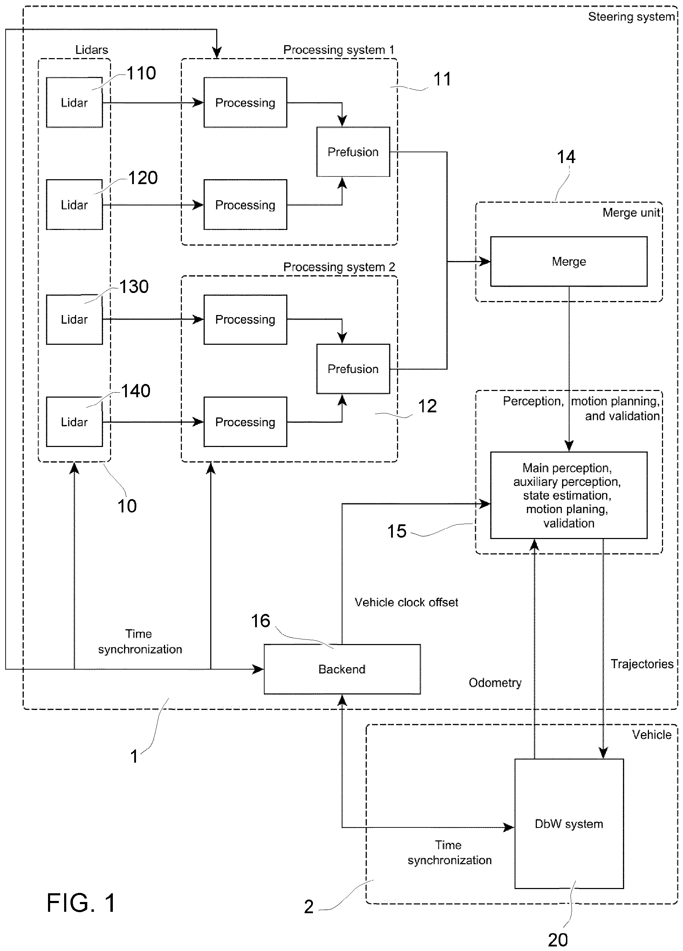

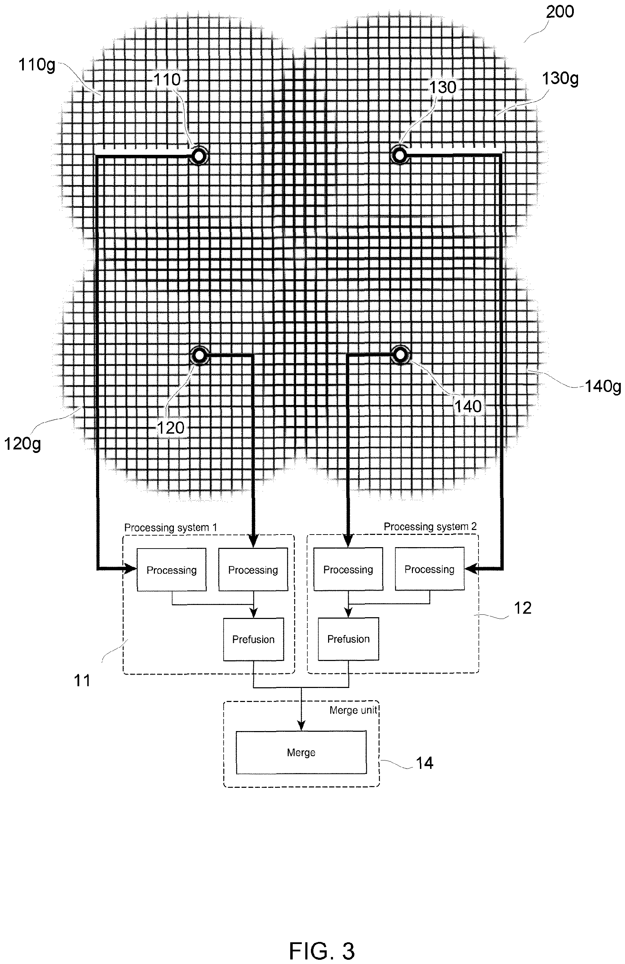

A first aspect of the invention is now described in detail. This aspect concerns a computer-implemented method of steering an automated vehicle 2 on a ground of a designated area 5 using a set of one or more offboard sensors 110 - 140, as illustrated in FIGS. 1, 3, and 6. Each sensor is a 3D laser scanning Lidar. The method is implemented by a system 1, which concerns another aspect of the invention. The system 1 includes the set of offboard perception sensors 110 - 140, as well as one or more processing systems 11, 12, 14, 15 (see FIGS. 1 and 3), where such processing systems are configured to perform steps according to the proposed method.

The vehicle 2 is partly automated, i.e., it includes a drive-by-wire (DbW) system 20, but typically has no sensing capability. That is, the vehicle 2 does not necessarily include perception sensors. In typical application scenarios, the vehicle 2 does actually not include any perception sensor at all. In other cases, the vehicle may include perception sensors. However, such sensors are preferably not active, i.e., not used to calculate the trajectories referred to in the present methods. In variants, such sensors may be involved to perform further redundancy checks, in addition to the method steps described below.

Note, the terminologies "autonomous" and "automated" are sometimes used as synonyms. In general, "autonomous", "semi-autonomous", and "partly autonomous", refer to concepts that involve some self-governance of machines that are capable of sensing their environment to safely move therein, avoiding obstacles and collisions with other objects, whether static or in motion. In this document, the terminology "automated" is to be understood as meaning that the automated vehicle incorporates automation to move (e.g., drive); it can automatically drive from one location to another, based on trajectories that are computed offboard and then communicated to the vehicle 2.

In the context of the present document, such trajectories are primarily obtained from offboard (external) sensors 21 - 24, while the vehicle does typically not have (or make use) of sensing capability to sense its environment. However, the automated vehicle 2 is equipped with a DbW system 20, as seen in FIG. 1. As usual, the DbW system 20 includes electromechanical actuators, to allow actuation of the vehicle. E.g., the automated system 20 of the vehicle 2 is capable of taking control of the vehicle for the latter to start, accelerate, brake, steer, and stop, so as to be able to move from one location to another. The vehicle 2 may otherwise have minimal processing capability, if only to manage emergency stops.

The automated vehicle 2 is a ground vehicle, typically an automated car. In principle, such vehicles can be of any type, e.g., cars, vans, transit buses, motorcoaches, trucks, lorries, or any other types of ground vehicles that may benefit from automation. In typical embodiments, though, the present automated vehicles are production cars, vans, electric vehicles, or the likes, which benefit from automatic driving.

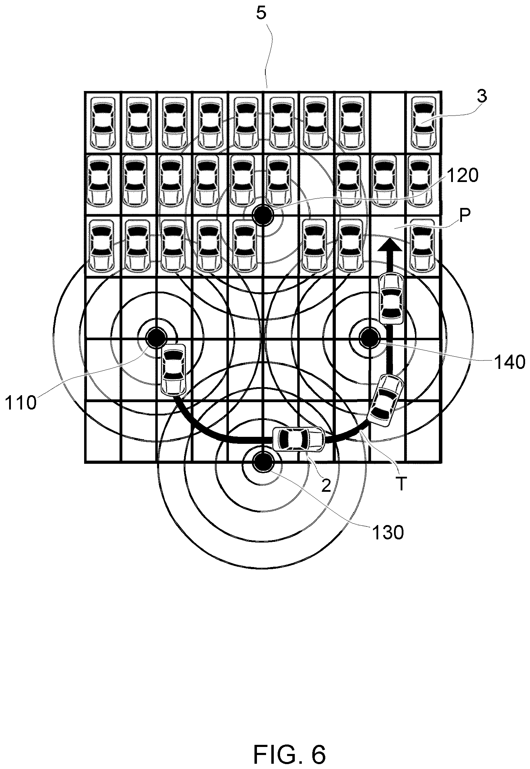

The vehicle 2 can be considered to form part of the system 1, or not. The 3D laser scanning Lidars 110 - 140 may possibly be complemented by other types of sensors, such as cameras, radars, sonars, GPS, and/or inertial measurement units, if only to allow heterogenous redundancy checks, as in preferred embodiments. Such sensors are arranged in a designated area 5 (e.g., a parking lot, as assumed in FIG. 6). The sensors are preferably infrastructure-based sensors, i.e., sensor mounted on given parts of the infrastructure of the area 5. The sensor may be statically arranged in the area 5 of interest. The sensors can, for example, be placed on pylons, poles or on given parts of the existing infrastructure. In variants, the sensors are movable sensors, i.e., sensors configured to move in the area 5. In that case, the sensors can be re-located to meet a specific logistics goal or a specific operation flow.

Various processing systems 11, 12, 14, 15 may form part of a control unit, which is in communication with the perception sensors 110 - 140 and the DbW system 20 of the vehicle 2. I.e., the control unit can send data to, and receive data from, the vehicle 2. To that extent, the control unit occupies a "central position" and can therefore be regarded as a central control unit, notwithstanding the several processing components 11, 12, 14 it includes.

The proposed method revolves around the repeated execution of algorithmic iterations (or algorithmic cycles), as exemplified in the flow of FIG. 2. Essentially, each iteration comprises obtaining an occupancy grid (step S30, in FIG. 2A), accordingly determining a trajectory for the automated vehicle (step S90, in FIG. 2A), and eventually forwarding (step S100) the determined trajectory to the vehicle to steer the latter. Various additional steps may be involved, as in embodiments described later.

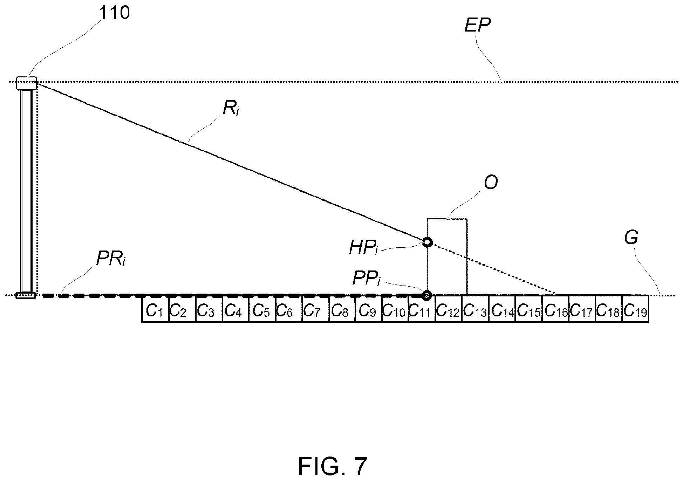

In detail, a grid is obtained (step S30) for each offboard sensor. Although, the present approach will typically rely on several offboard sensors, it may already be implemented with a single offboard sensor. Thus, the following describes operations performed in respect of a single sensor, for simplicity; embodiments involving several offboard sensors are discussed later in detail. The grid obtained is a 2D occupancy grid of cells, which are populated to reflect a perception of the corresponding sensor. The grid is obtained by first accessing a dataset (step S32 in FIG. 2B), which captures a point cloud model of an environment of this sensor. The accessed dataset is then processed to identify characteristics of rays *Rᵢ* emitted by the sensor. Such characteristics notably include hit points *HPᵢ* of the rays, as well as projections *RPᵢ, PPᵢ* of the hit points and the rays on a reference plane G corresponding to the ground of the designated area 5, see FIG. 7. The ground level corresponds to the horizontal plane on which the vehicle rests or drives in the designated area 5. The ground is typically flat or essentially flat. That is, small deformations may be present, e.g., ramps, steps, and/or bumps. The reference plane G typically the lowest plane of the ground level, although it may also be taken as an average plane of the ground level.

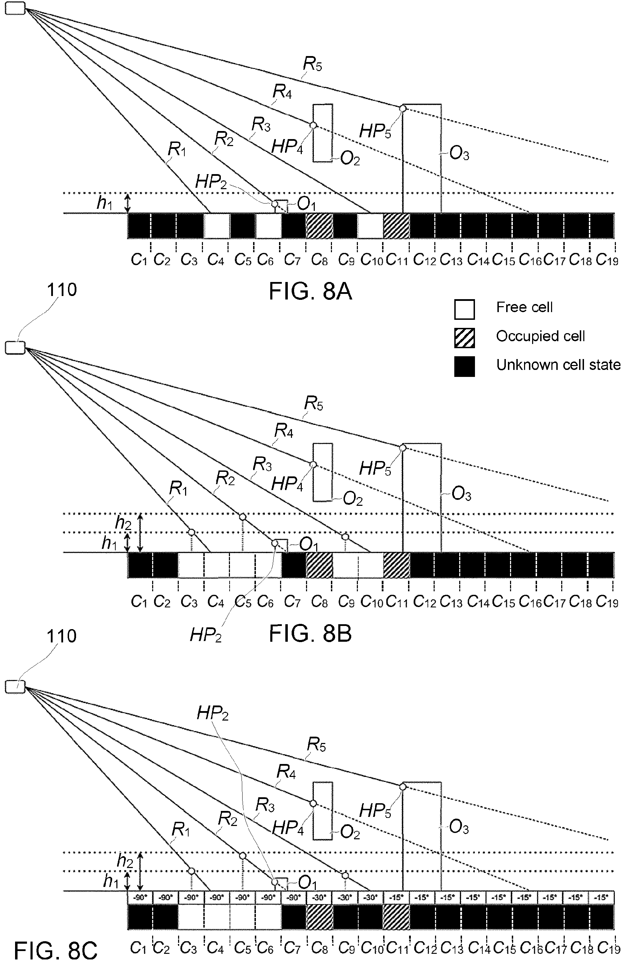

In order to populate the grid, the method determines S34 a state of each cell, using the identified characteristics. Step S34 involves two threshold heights *hi, h₂.* The first height *h*₁ is defined above the reference plane G, while the second height h₂ is defined above the first height, as illustrated in FIGS. 8B and 8C. The first and second heights are measured with respect to the reference plane *G*. In typical embodiments, the first height is between 3 and 8 cm, although it is preferably equal to 5 cm, while the second height is between 12 and 30 cm, and preferably equal to 20 cm.

The states of the cells are determined S34 by assessing two conditions. According to the present invention, a necessary and sufficient condition (first condition) for each cell to be in an occupied state is to be matched by a projection of a hit point located above the first height *h*₁. In addition, a necessary condition (second condition) for each cell to be in a free state is to be crossed by a projection of an overhanging ray that has dropped below the second height *h*₂ when passing over this cell. While the first condition is a necessary and sufficient condition, the second condition is only a necessary conditions, and not a sufficient condition. In particular, the second condition is subject to the first condition. I.e., no overhanging ray can set a cell free if this cell is otherwise matched by a hit point. Moreover, one or more additional conditions may be applied, as exemplified later.

Eventually, the vehicle trajectory is determined S40 - S80 based on the grid obtained for each sensor and then forwarded S90 to the DbW system 20 of the automated vehicle 2, so as to steer the latter. Steps S30 - S80 are repeatedly performed, during each iteration, so as to repeatedly update the vehicle trajectory, taking into account potential changes in the environment of the vehicle 2. Note, updating a trajectory amounts to determining a new trajectory, albeit close to the previous trajectory. Trajectories sent to the DBW system 20 are translated into commands for the electromechanical actuators of the DbW system 20, to allow actuation of the vehicle. I.e., the automated system 20 takes control of the vehicle, which will accordingly start, accelerate, brake, steer, and stop, so as to move from one location to another. Practically speaking, a trajectory can be defined as series of commands for respective actuators (acceleration, steering, and braking) and for successive time points. That is, such commands form a timeseries that embody a trajectory, which is determined in accordance with a goal set in space, or preferably set in both space and time.

The algorithmic iterations are preferably executed at an average frequency that is between 5 and 20 hertz, and more preferably equal to 10 hertz. Such frequencies call for efficient computations. Now, an advantage of the present approach is that trajectories are determined on mere 2D grids (instead of 2.5 or 3D grids), which reduces the computations. In addition, the above conditions allow the states of several cells to be determined at once. In particular, the way the second condition is formulated means, in practice, that backtracing each ray makes it possible to determine, at once, the states of all cells crossed by the projection of an overhanging ray that has dropped below the second height. In practice, the method may loop through the point cloud obtained from each Lidar to determine the state of each cell of the corresponding grid. In other words, exploiting ray projections speeds up the determination of the cell states.

A dataset processed at iteration i concerns rays that have likely been emitted during a previous iteration. The iteration frequencies and the Lidar operations can be adjusted so that any dataset processed at iteration i concern rays that have been emitted during the immediately preceding iteration i - 1. The exact implementation, however, may depend on the iteration frequency sought.

In the present context, the Lidars are offboard sensors, which can be mounted (fixedly or not) on the infrastructure of the area 5. In variants, the Lidar can be placed on pylons or poles, as noted earlier. In both cases, the Lidars are preferably arranged at a certain height above the ground level, e.g., between 1.9 m and 5 m, or more preferably between 1.9 m and 3 m. The higher the Lidar, the larger the area covered and the less it gives rise to shadows (occlusions). However, the higher the Lidar, the lower the resolution. Thus, a trade-off can be sought, hence the preferred heights mentioned above.

A 3D laser scanning Lidar (light detection and ranging) maps a large number (typically thousands to millions) of data points. A laser scanner works by sending light pulses at high speeds. The pulses reflect off objects to return back to the sensor, whereby the distance between the sensor and reflecting object is measured by determining the time elapsed between the sent and received pulses. Each data point is converted to a pixel with a given (*x, y, z*) coordinate. Data points are captured and processed into a point cloud, yielding an accurate 3D representation.

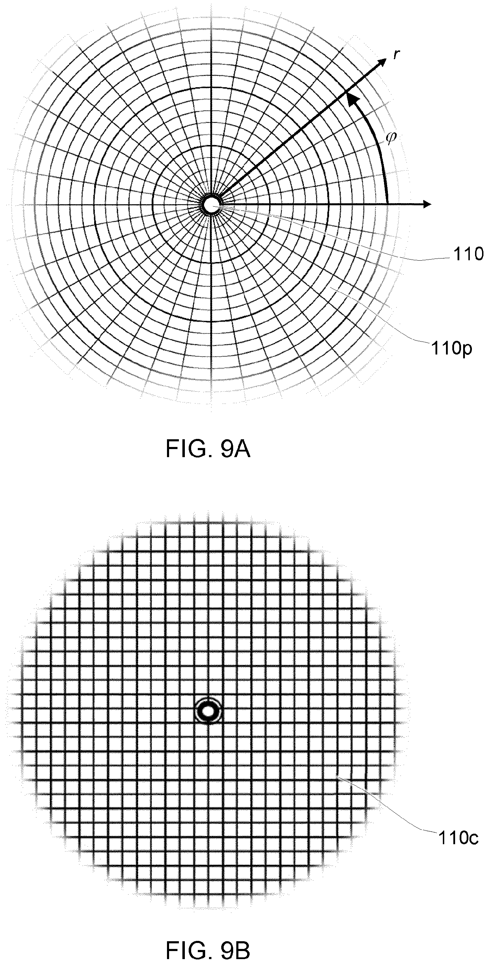

A rotating Lidar lends itself well to determining the 2D grids in polar coordinates. I.e., 3D laser scanning Lidars operate by scanning multiple directions, in several elevation planes. FIGS. 7 - 8C focus on a single elevation plane, i.e., a plane corresponding to a given azimuth *φ.* Thus, the grid obtained for each sensor at step S30 is preferably a polar grid, i.e., a grid defined according to a polar coordinate system, as shown in FIG. 9A. The pole of the polar grid 110p corresponds to a location of a given Lidar 110. Each resulting cell is defined by a given value of radius *r* and a given azimuth (angle *φ* in FIG. 9A). Once it has been populated, a polar grid can be converted into a cartesian grid, to ease data fusion, as in embodiment discussed below. To determine the state of a cell in the polar grid, the point cloud can be processed point by point, where each point corresponding to an emitted laser ray.

In embodiments, each of the offboard sensors is configured to scan its surroundings by emitting pulses at constant elevation angles in an elevation plane rotated around the zenith direction. I.e., a light ray comb is 360° scanned around the zenith direction, where the rays in a given elevation plane have respective, constant angles from the reference plane *EP* of the Lidar, see FIG. 7. Each Lidar may for instance allow up to 64 000 points per full rotation. The elevation angles are preferably separated by at most one degree of angle in the elevation plane, i.e., the plane transverse to plane G and corresponding to a given azimuth. The angles of the rays may span a range of at least 30 degrees of angle in each elevation plane. For example, each lidar may scan 32 rays distributed between -16° and +15° with respect to a given reference angle (called zero angle), itself inclined with respect to the reference plane *EP* of the Lidar. Several Lidars can have different zero angles, depending on how they are arranged across the area 5. That said, the present invention does not depend on a particular Lidar configuration.

FIG. 7 illustrates the geometry of a given ray *Rᵢ*, as emitted by a Lidar 110 in a given elevation plane. This elevation plane is transverse to the reference plane *G* (corresponding to the ground of the designated area 5) and corresponds to a given azimuth *φ.* This elevation plane contains one or more emitted ray *Rᵢ*; it preferably contains several rays, emitted at different angles, as shown in FIGS. 8A - 8C. A ray *Rᵢ* may happen to hit an object *O*, thus leading to a hit point *HPᵢ.* In FIG. 7, the projection of the hit point *HPᵢ* in the plane *G* is denoted by *PPᵢ,* while the projection of the ray in the plane *G* is denoted by *RPᵢ*. The ground plane *G* decomposes into several cells *Cᵢ* (*i* = 1 to 19), which may possibly be matched by a hit point projection or crossed by a ray projection. The plane *EP* is parallel to the reference plane *G* and corresponds to a reference plane of the sensor 110, from which ray angles are measured. Similar notations are used in FIGS. 8A- 8C.

As illustrated in FIG. 8A, a hit cell (represented as a square with upward diagonal stripes) is a cell that matches a hit point projection. A hit cell typically includes the hit point projection, although a tolerance may be applied, such that a given hit point, having a given hit projection, may possibly match several cells. A cell is marked as occupied if it can be assigned a hit point that is above the first threshold height *h*₁ above ground (e.g., 5 cm), as per the first condition described above. If the hit point is below this height, then it cannot set this cell in the occupied state. Occupied cells are represented as black squares. In the example of FIG. 8A, the ray *R*₂ hits the object *O*₁, yielding a hit point *HP₂.* Since this hit point is located below the first threshold height *h*₁, it cannot set the corresponding cell *C*₆ in an occupied state; this cell *C*₆ may thus eventually be declared free, as assumed in the example of FIG. 8A. In other words, the first threshold height *h*₁ allows a tolerance, under which hit points do not count as true obstacles for the vehicle. However, the rays *R*₄ and *R*₅ respectively hit objects *O*₂ and *O*₃, yielding respective hit points *HP₄* and *HP₅.* As such hit points are above the first threshold height *h*₁, the cells matched by the corresponding hit point projections (not explicitly shown in FIG. 8A, in the interest of clarity) are declared occupied, in accordance with the first condition. Again, this condition is not only necessary, but is also sufficient to mark the corresponding cells as occupied cells. FIG. 8A only enforces the first condition.

FIG. 8B further enforces the second condition. As illustrated in FIG. 8B, the second condition applies to all cells that happen to be crossed by the projection of an overhanging ray (i.e., a ray passing over this cell), provided that this ray has already dropped below the second threshold height *h*₂ without hitting a hit point when passing over such cells. That is, it is necessary that a ray has dropped below *h*₂ when passing above a cell of interest to mark this cell free, subject to the first condition, as well as other potential conditions, if any. The second condition is a necessary condition: a cell can only be marked free if it is crossed by a projection of an overhanging ray that has already dropped below the second height without hitting a hit point when passing over this cells. Since the Lidar rays are emitted at constant angles, further cells along a same ray may possibly be marked free, unless such cells happen to match a hit point projection, by virtue of the first condition. For instance, backtracing the ray *R*₁ allows both cells *C*₃ and *C*₄ to be marked free, as opposed to FIG. 8A (again, FIG. 8A only enforces the first condition, while FIG. 8B enforces both the first and second conditions). However, the second condition may be augmented with a further condition, as now discussed in detail.

As vehicles do not reach down to the ground everywhere, free cells may occur even within the area spanned by a vehicle. A further condition is thus preferably applied to address this issue. As said, the grid obtained at step S30 is preferably defined according to a polar coordinate system. The pole of the polar grid corresponds to a sensor location, such that each cell is defined by a given radius and a given azimuth, as illustrated in FIG. 9A. The further condition is assessed at step S34. The aim of this further condition is to lower "false" free cells, notably within the area spanned by a vehicle. FIG. 8C enforces this further condition, in addition to the first and second conditions. Consider an outer cell (e.g., cell *C*₉ or *C*₁₀) on a same azimuth, but at a larger radius, than an inner cell (e.g., cell *C*₈), which is matched by the projection of an inner hit point *HP*₄ of a reference ray *R*₄. In that case, no overhanging ray is allowed to set the outer cell *C*₉ or *C*₁₀ in a free state if this overhanging ray has already passed below the inner hit point *HP₄* when passing over the outer cell considered (be it *C*₉ or *C*₁₀). As a result, the ray *R*₃ cannot set cells *C*₉ and *C*₁₀ to a free state because it has already passed below *HP₄* when passing over cells *C*₉ and *C*₁₀.

A practical implementation may for instance use elevation angles of the rays. In that case, the characteristics identified at step S32 further include elevation angles of the rays. The further condition is enforced by comparing, at step S34, the elevation angle of each ray (e.g., *R₃*) passing over an outer cell of interest with the elevation angle of a reference ray (e.g., *R*₄) that led to the critical hit point *HP*₄*.* According to this further condition, the elevation angle of the overhanging ray *R*₃ must be larger than the elevation angle of the reference ray *R*₄ to be allowed to set the outer cell *C*₉ or *C*₁₀ in a free state. Because *R*₄ leads to a hit point that is above *h*₁ at the level of cell *C*₈, the ray *R*₄ sets a minimal elevation angle for any ray that may potentially set outer cells to a free states, such as ray *R*₃. And because the elevation angle of *R*₃ is less than the minimal elevation angle required, *R*₃ cannot set cell *C*₉ or *C*₁₀ to a free state. In other words, if a hit point is found, the elevation of the corresponding ray is defined as the minimum elevation angle for all outer cells on the same azimuth. Such an approach is computationally efficient. FIG. 8C shows the minimal elevation angles applicable to each cell. This further condition notably prevents cells within a vehicle's area to be unduly marked as free.

To summarize, in preferred embodiments, hit points above the ground level *G* but below a defined height value *h*₁ are considered irrelevant, i.e., the corresponding cell can be marked as free (FIGS. 8A- 8C). Furthermore, each ray contains not only information about the cell below the hit point, but also about the cells on the way to this hit point. So, as soon as a ray on the way to a hit point drops below a defined height value *h*₂ (e.g., 20cm), the cells in vis-à-vis can be assumed to be free as well (FIGS. 8B, 8C). Still, where a hit point is found, the elevation angle of the corresponding ray is defined as the minimum elevation angle for all outer cells, i.e., cells residing at a larger radius on the same azimuth, see FIG. 8C. Then, rays that hit such an outer cell at a lower height than *h*₁ but have passed below a legal hit point (i.e., above *h*₁) are not allowed to set the cell free.

Sometimes, the actual cell states may be unknown, e.g., because no information is available, due to occlusion. While such cells would normally be assumed to be occupied (by default, for security reasons), an alternative is to consider a further cell state, i.e., the unknown (or undetermined) state. So, cells may further be set to the unknown state, as seen in FIGS. 8A-8C. In this case, step S30 may further comprise initializing S31 each of the cells to the unknown state, by default. Then, at step S34, the method may determine the state of each cell by iterating over each ray to infer a state of each cell that is impacted by each ray. I.e., the states of the cells are determined by looping through the point cloud. Each condition is assessed in view of each ray, such that the procedure only needs a single loop through the rays to infer the states of all grid cells. This approach is effective because a same ray can impact several cells, due to the second condition and the further condition.

As a result of the initialization procedure, the states of the cells that are not determined to be in a free state or an occupied state at the end of an iteration remain the unknown state, by default. In particular, the state of any cell that is not allowed to be in a free state (e.g., because of occlusion) remains the unknown state. It is nevertheless possible to refine unknown states of cells, by leveraging the history of this cell, as explained later.

Referring to FIGS. 1, 3, and 6, in embodiments, the set of offboard sensors preferably comprises *N* sensors 110 - 140, where *N* ≥ 2. The sensors are located at distinct positions in the designated area 5, such that *N* grids are obtained, which overlap at least partly, as illustrated in FIG. 3. In that case, the method further comprises fusing S40, S60 data from the *N* grids obtained. Eventually, the trajectory is determined based on the fused data.

Polar coordinates make it complicated to reconcile overlapping 2D grids. Therefore, the grids obtained at step S30 are preferably converted into Cartesian grids, prior to fusing grid data (compare FIGS. 9A and 9B). As illustrated in FIGS. 3, the cartesian grids have rectangular cells; at least some of the rectangular cells coincide, due to the sensor locations and corresponding grid definitions. More precisely, the cells of any one of the *N* grids coincide with cells of one or more distinct ones of the *N* grids, as illustrated in the simple example of FIG. 3.

Referring to back to FIG. 2A, the *N* grids are preferably obtained by dispatching S20 sensor data to *K* processing systems 11, 12 (see FIGS. 1 and 3), for reasons of scalability and computational tractability. In preferred embodiments, the number of such processing systems is larger than or equal to 4. That is, each processing system *k* of the *K* processing systems (i.e., *k* = 1 to *K*) receives, at each iteration, *Nₖ* datasets of sensor data, where *Nₖ* ≥ 2 ∀ *k.* Such data are obtained (step S5) from *Nₖ* respective sensors of the set 10 of offboard perception sensors 110 - 140.

The data are preferably fused in two steps, at each iteration. That is, the *Nₖ* datasets are processed S30 at each processing system *k* to obtain *Mₖ* occupancy grids, where the *Mₖ* grids reflect perceptions from *Mₖ* respective sensors. Ideally, *Nₖ* occupancy grids are obtained upon completing step S30, i.e., *Mₖ = Nₖ.* However, in embodiments, some of the *Nₖ* datasets may be discarded, for reasons discussed later. Thus, in general, *Nₖ* ≥ *Mₖ* ≥ 1. The *Mₖ* occupancy grids are grids that overlap at least partly in space.

As illustrated in FIG. 1, each processing system *k* fuses S40 data from *the Mₖ* occupancy grids obtained at step S30 to form a fused occupancy grid. That is, *K* fused occupancy grids are formed by the *K* processing systems 11, 12, respectively. Note, the *K* occupancy grids will typically overlap at least partly in space, too. The fusion step S40 can be regarded as a prefusion operation, given that the *K* fused occupancy grids are later merged at step S60.

To that aim, the *K* fused occupancy grids are first forwarded S50 to a further processing system 14, which differs from the systems 11, 12. The processing system 14 merges S60 the *K* fused occupancy grids to obtain a global occupancy grid for the designated area 5. The merge operation S60 and the fusion operations S40 are similar operations, which can even be identical. Both steps S40, S60 rely on data fusion and aim at reconciling data obtained from distinct sources, with a view to forming a more complete, consistent, and accurate representation of the designated area 5, or portions thereof.

Once a global occupancy grid has been obtained, the method can proceed to determine (or update) S90 a trajectory for the automated vehicle 2 based on the global occupancy grid, and forward S100 this trajectory to the DbW system 20 of the automated vehicle 2. Steps S90 and S100 can be performed by additional processing systems 15, i.e., systems that are distinct from the system 11, 12, and 14, as assumed in FIG. 1.

The control unit may comprise distinct sets of processors, where each of the sets comprises one or more processors. In particular, the processing systems 11, 12, 14, 15 can advantageously be mapped onto respective ones of the distinct sets of processors. Even, the processing systems 11, 12, 14, 15 are preferably implemented as distinct computers of the control unit. The exact mapping, however, may depend on the security levels offered by the (sets of) processors. In variants, the control unit may be embodied as a single computer, provided that its sets of processors are sufficiently safe. An example of suitable functional safety standard is defined by the ISO26262 standard for the development of electrical and electronic systems in road vehicles.

In the present context, several sensor datasets need to be repeatedly processed, at a high frequency. As said, the resulting throughput and compute requirements are difficult to meet, particularly with a secure computing system. To address this problem, the present systems and methods preferably rely on a scalable architecture, which allows the above requirements to be met, irrespective of the redundancy level desired (the processing systems 11, 12 can be redundant, for safety reasons).

According to the above approach, several processing devices 11, 12 are provided to handle sensor datasets from respective, distinct subsets of the perception sensors (e.g., Lidars), to allows tractable computations. The processing systems 11, 12 produce occupancy grids which are pre-fused (locally, at the level of the systems 11, 12), before being merged by a distinct processing system, which relies on distinct (sets of) processors. Performing the prefusion at the level of the processing systems 11, 12 makes it possible to save bandwidth. The trajectories can then be computed (e.g., by the system 14 or one or more other processing systems 15) according to any known, suitable scheme.

The *Nₖ* datasets are advantageously subjected to a specific timestamping scheme. In practice, the *Nₖ* datasets received at each iteration by each processing system *k* are respectively associated with *Nₖ* first timestamps, corresponding to times at which the Lidar measurements were performed. Now, such times may slightly differ, giving rise to time differences that may have to be adequately handled, for security reasons. To that aim, each iteration may further comprise assigning *K* second timestamps to the *K* fused occupancy grids (step S40), where each of the *K* second timestamps is conservatively chosen to be equal to the oldest source timestamp. That is, each of the *K* second timestamps is set equal to the oldest of the *Nₖ* first timestamps associated with the *Nₖ* datasets as processed at each processing system *k.*

Similarly, a global timestamp may be assigned (at step S60) to the global occupancy grid eventually obtained at each iteration, where this global timestamp is set equal to the oldest of the *K* second timestamps. Eventually, the trajectory is determined or updated S90 in accordance with the global timestamp as set at step S60. This timestamp assignment makes it possible to check the temporality of incoming data and its validity for subsequent processing. This is particularly advantageous in a distributed system such as shown in FIG. 1. This assignment scheme provides a simple way to track the timing of perception measurements and ensure that obsolete data is removed from the downstream trajectory calculation.

In particular, this scheme makes it possible to discard any obsolete dataset from the occupancy grid calculation . I.e., the processing step S30 may discard any of the *Nₖ* datasets (as processed by any processing system *k*) that is older than a reference time for the *Nₖ* datasets by more than a predefined time period. This time period can for instance be set equal to 150 ms. As a result, *Mₖ* is at most equal to *Nₖ.* Note, the reference time can be computed as an average of the *Nₖ* timestamps, e.g., using a geometric or arithmetic average. More generally, any suitable definition of the average can be used, e.g., as derived from the generalized mean formula, preferably using an exponent that is larger than or equal to zero. So, any datasets that is older than the average time for the *Nₖ* datasets by more than a predefined time period is preferably discarded to ensure safer trajectory calculations.

Each of the *Nₖ* datasets is preferably processed S30 (at each processing system *k*) to initially determine a first 2D grid defined in a polar coordinate system. This first grid is then converted into a second 2D grid, which is defined in a cartesian coordinate system. I.e., *the Mₖ* occupancy grids as eventually obtained at each processing system *k* are obtained as 2D grids having rectangular cells of given dimensions. Similarly, the resulting *K* fused occupancy grids and the global occupancy grid are, each, formed as a 2D grid having rectangular cells of the same given dimensions. Moreover, such grids are arranged in such a manner that cells of the global occupancy grid coincide with cells of the *K* fused occupancy grids, and cells of the *K* fused occupancy grids themselves coincide with cells of the *Mₖ* occupancy grids as eventually obtained at each of the *K* processing systems 11, 12.

This is illustrated in FIG. 3, where grids 110g, 120g are obtained and fused by a first processing system 11, thanks to output data from Lidars 110, 120, while grids 130g, 140g are concurrently obtained and fused by a second processing system 12, thanks to output data from Lidars 130, 140. The fused grids are then merged by a further processing system 14, which results in a global grid 200. These grids are finite in the 2D space in which they are defined (i.e., they include a finite number of cells). The grids partly overlap, whereby at least some of their rectangular cells coincide. I.e., the *Mₖ* occupancy grids overlap at least partly. And so do the fused grids.

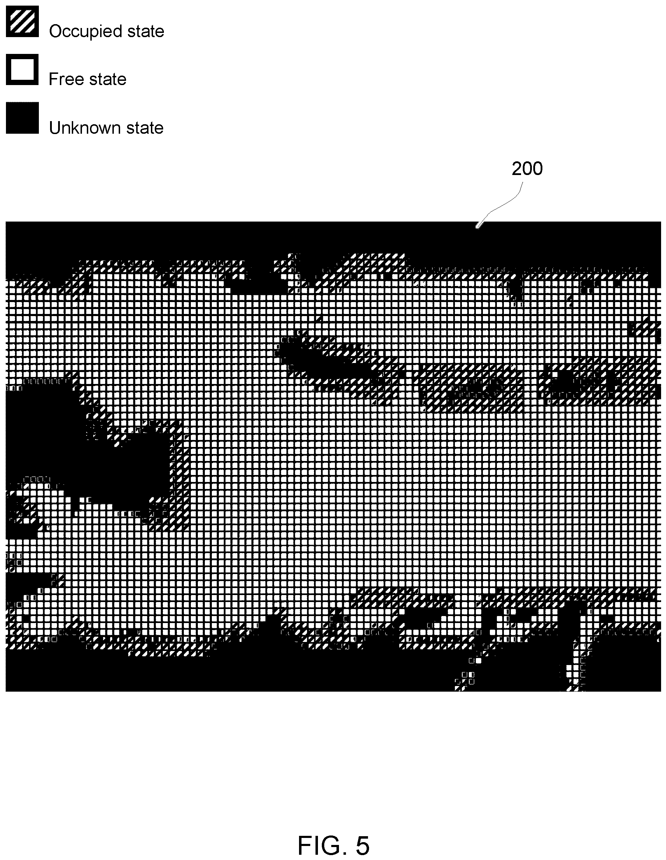

In embodiments, the grids 110g - 140g are determined by determining states of the cells of the grid, in accordance with hit points captured in the datasets received from the Lidars. As illustrated in the example of grid shown in FIG. 5, the cells can be marked as having a free state, an occupied state, or an unknown state. In the example of FIG. 5, the grid reflects the world representation, i.e., the surroundings of a vehicle of interest. The representation of this vehicle (often referred to as "ego vehicle") is not incorporated in this depiction. Preferably, though, each occupancy grid captures a global representation, which further embeds a representation of the vehicle 2 in the world representation.

Data from the *Mₖ* occupancy grids can be fused S40 by computing, for each cell of the *K* fused occupancy grids, a value based on a state of each of the rectangular cells of each grid of the *Mₖ* occupancy grids obtained S30 earlier. The computed value is then associated with the respective cell. A similar or identical mechanism can be implemented to merge the *K* fused grids. This value can for instance be computed as a count, which is incremented, decremented, or left unchanged, in accordance with the determined state of the cell. That is, this value is incremented (e.g., by a unit value, or 1) if a corresponding cell of any of the *Mₖ* occupancy grids has a free state, decremented (e.g., by 1) if a corresponding cell of any of the *Mₖ* occupancy grids has an occupied state, and left unchanged if a corresponding cell of any of the *Mₖ* occupancy grids has an unknown state. In other words, the present methods may implement a simple voting system, whereby each Lidar votes for 1, - 1, or 0, according to whether a cell is occupied, unoccupied or unknown. This makes it possible to simply "fuse" information, thereby reducing the amount of data for downstream processing.

The cells in the unknown state can possibly be refined, by performing a revision procedure, whereby any obtained grid is revised by correcting the cell states based on their history. For example, a grid can be revised by first identifying cells that are in the unknown state, and then inferring states of the identified cells (based on their respective history). This makes it possible to compensate for temporary occlusion of the cells and inadvertent changes of cell values, which are detrimental to the trajectory computations. I.e., as a result of the revision procedure, the cell states are more stable over time, such that the trajectories obtained are more reliable.

The cell history is preferably captured by a single cell memory value, which reflects a historical propensity of a cell to be in the free or occupied state. The cell memory value is updated at each iteration. So, unknown cell states can be corrected by performing an inference based on the cell memory value as updated last. Relying on a single value allows remarkably simple (and thus fast) calculations, which are easily compatible with frequencies as contemplated herein. Cell memory values can be updated so as to be increased, respectively decreased, if the cell is determined to be in the free state, respectively the occupied state. I.e., mere arithmetic operations are required, resulting in only a small calculation overhead.

A further, concurrent update mechanism may additionally be involved, to allow the cell to gradually forget its past, for security reasons. I.e., in embodiments, the single cell memory value is further updated, at each iteration, so that an absolute value thereof is decreased if the state of the corresponding cell is determined to be the unknown state. Moreover, cell memory values can be constrained to belong to a given interval of values. This gives rise to a safeguard that avoids unreasonable growth of the cell memory values. This interval determines a period of time after which the revision procedure can no longer infer a free or occupied state, should the cell be repeatably determined to be in the unknown state.

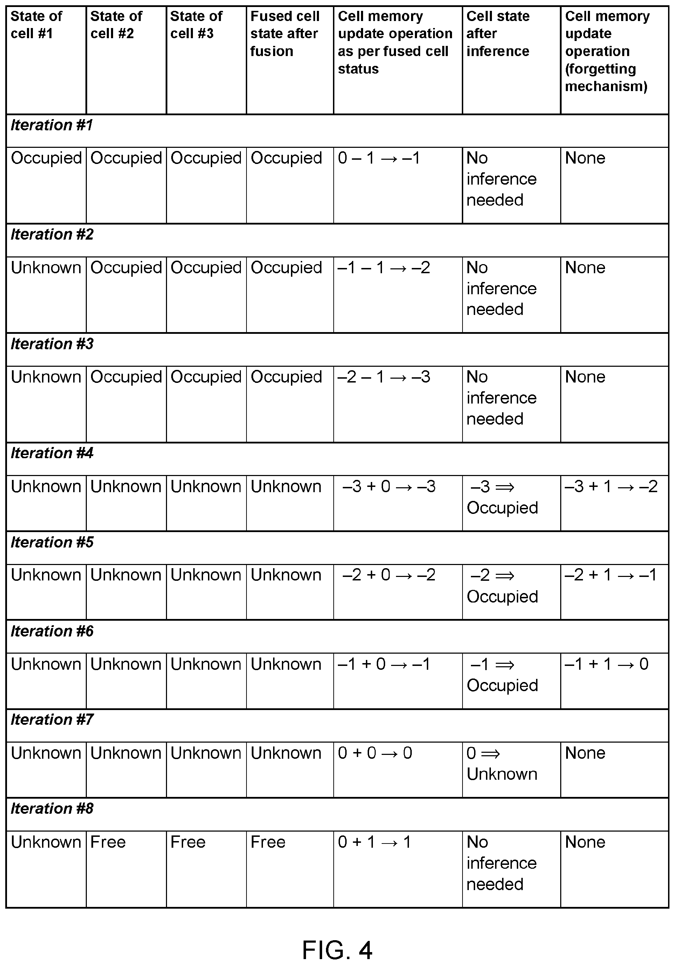

A concrete example is now discussed in reference to FIG. 4. In this example, each cell memory value is defined as an integer value. This value is updated so that it is incremented by 1, respectively decremented by 1, if the cell is determined to be in the free state, respectively the occupied state. In addition, the memory cell value is modified so that its absolute value is decremented by 1 if the cell is determined to be in the unknown state. That is, the cell memory value is computed as a count, which is incremented, decremented, or left unchanged, in accordance with the state of the cell as determined last from the perception. The endpoints of the safeguard interval consist of integer values of opposite signs. The interval considered can typically be [-10, 10]. Restricting to integer values further simplifies calculations; only integer arithmetic operations are required.

FIG. 4 is a table showing states as determined for three coinciding cells (cell #1, cell #2, and cell #3), in accordance with overlapping perceptions formed from three respective Lidars. I.e., the values of such cells come from distinct Lidar measurements, which yield distinct (albeit overlapping) grids. As the grids partly overlap, at least some of the cells of one grid coincide with cells of one or each of the other two grids, as illustrated in FIG. 3. Such cells are meant to be fused or merged, as explained earlier.

During the first iteration (Iteration #1), the state of each of the cells (cell #1, cell #2, and cell #3) is determined to be the occupied state. A majority vote obviously concludes to an occupied state for the fused cell (fourth column). Accordingly, the cell memory value of the fused cell is decreased (fifth column), so that the updated cell memory value is equal to -1. This value is initially set equal to 0; the operation performed reads 0 - 1 → -1, such that the new cell memory value is equal to -1. No inference (sixth column) is needed here as the majority vote unambiguously concludes to an occupied state. For the same reason, no additional update (seventh column) is required, as there is no need to forget the accumulated value.

During the second iteration, the cell states remain the same for cell #2 and cell #3, while the first cell is now determined to be unknown. A majority vote again concludes to an occupied state for the fused cell. The cell memory value is thus decreased again (-1 - 1 → -2). The same observations are made during the third iteration (the cell states remain unchanged), such that the vote concludes to an occupied state. The cell memory value is accordingly decreased (-2 - 1 → -3). However, during each of the next four iterations (Iteration #4 to #7), all cells now happen to be in the unknown state, something that may typically results from a temporary occlusion or a signal alteration. In such cases, the actual state of the fused cell can be inferred to be occupied, based on the history of the cell but only as long as the forgetting mechanism permits.

Practically speaking, use is made of the last known cell memory value (i.e., -3) during the 4^{th} iteration. This value indicates that the state is probably still occupied (-3 ==> Occupied). As no new information is available (the state determined last is the unknown state), the cell memory value is decreased toward zero (i.e., -3 + 1 → -2), as a result of the forgetting mechanism. The same repeats over the next two iterations (-2 + 1 → -1, -1 + 1 → 0), until the cell memory value reaches the value zero. From this point on, it can no longer be assumed that the fused cell is occupied, and its state now switches to "unknown" during the 7^{th} iteration. If the next vote (8^{th} iteration) concludes to a free state, however, then the count can be increased again (0 + 1 → 1), and so on. Note, various practical implementations can be contemplated for the above mechanism. In particular, the distinction between the 5th and 7th column is made for the sake of clarity. In practice, however, the cell memory would likely be updated in a single step.

The above revision procedure may possibly be implemented before fusing the grids (i.e., after step S30 in FIG. 2A), after the prefusion (i.e., after step S40 in FIG. 2A), and/or after merging the fused grids (i.e., after step S60 in FIG. 2A). Given the simplicity of the operations required (integer arithmetic operations), this revision procedure may well be implemented in respect of each grid, i.e., upon completing step S30, upon completing step S40, and after merging S60 the fused grids. In the example of FIG. 2A, however, the revision procedure is assumed to be only implemented after merging the K fused occupancy grids. I.e., the algorithm identifies S70 cells of the global occupancy grid that have an unknown state and infer correct states of such cells based on corresponding cell memory values. Cell memory values are updated S80 during each iteration, based on the state determined last (yet before the correction by inference).

Referring back to FIG. 2A, determining trajectories for the vehicle 2 requires knowing the state of the vehicle, as with all motion planning techniques. To achieve this, use can be made of vehicle states inferred from the Lidar measurements. Moreover, the state of the vehicle can be refined thanks to odometry signals obtained from the vehicle, hence the benefit of using both offboard Lidar measurements and odometry signals. Thus, in embodiments, the state of the automated vehicle 2 is updated S110, during each iteration, by reconciling states of the automated vehicle 2 as obtained, on the one hand, from the global occupancy grid and, on the other hand, from odometry signals obtained from the vehicle 2 itself. Thus, the subsequently computed trajectory is determined in accordance with a more consistent state of the vehicle 2.

The trajectories are preferably computed by dedicated processing systems 15, which are preferably distinct from the *K* processing systems 11, 12 and the further processing system 14. The systems 15 may for instance implement a main perception system and an auxiliary perception system, as assumed in FIG. 1, thanks to distinct processing systems (call them primary and auxiliary processing system), which are in communication with each other. That is, the primary processing system is configured to form a main perception based on signals from various types of perception sensors (e.g., involving Lidars and cameras), estimate states of the vehicle based on feedback signals from the DbW system 20, and compute trajectories for the vehicle 2 based on the main perception formed and the estimated states. The auxiliary processing system is configured to form an auxiliary perception based on signals from only a subset of the perception sensors (e.g., only the Lidars, assuming the perception sensors further include other types of sensors, like cameras), validate the computed trajectories based on the auxiliary perception formed (to enable a heterogeneous redundancy check), and cause the control unit to forward the validated trajectories to the DbW system 20.

This way, the vehicle can be remotely steered from the control unit, through the DbW system 20, based on validated trajectories forwarded by the control unit to the DbW system. All the sensors of the set are used to form the main perception. However, instead of re-using all of the perception sensors to form a full redundancy, only a subset of the sensors are used to form the auxiliary perception that is then used to validate the trajectories. In other words, distinct perceptions are formed from overlapping sets of sensors, whereby one of the perceptions formed is used to validate trajectories obtained from the other. This approach requires less computational efforts, inasmuch as less signals (and therefore less information) are required to form the auxiliary perception. Still, this approach is more likely to allow inconsistencies to be detected, thanks to the heterogeneity of sensor signals used to obtain the main and auxiliary perceptions.

Another aspect of the invention concerns the system 1 itself, see FIG. 1. This system comprises a set 10 of offboard perception sensors (including one or more 3D laser scanning Lidars 110 - 140), as well as one or more processing systems 11 - 15. Note, the system 1 can be regarded as including the steered vehicle(s), it being noted that the present techniques can be implemented to steer several automated vehicles. In general, the system 1 is configured to execute several algorithmic iterations, consistently with the present methods. I.e., in operation, each iteration comprises performing steps as described earlier, i.e., obtaining one or more occupancy grids, accordingly determining a trajectory for the automated vehicle, and eventually forwarding the determined trajectory to the vehicle to steer the latter.

The processing systems 11 - 15 may for instance include *K* processing systems 11, 12 (to distribute the processing tasks and perform the prefusion), a further processing system 14 (to merge the fuse grids), as well as an additional processing systems 15 (to plan and validate trajectories). This way, the system 1 may dispatch sensor data to the *K* processing systems 11, 12, process datasets at each processing system *k* to obtain occupancy grids, fuse data from such occupancy grids to form fused occupancy grids, and forward the fused occupancy grids to the further processing system 14 for it to merge them and obtain a global occupancy grid, based on which a trajectory can eventually be determined and forwarded to the DbW system 20 of the vehicle 2.

The system preferably comprises redundant sets (e.g., two sets) of processing systems, where each set comprises *K* processing systems (e.g., *K* ≥ 4). In that case, the system 1 is further configured to check whether occupancy grids obtained by each of the redundant sets match. Downstream computations continue as long as the occupancy grids match, else an auxiliary procedure (e.g., an emergency stop) is triggered.

Another, but closely related aspect of the invention concerns a computer program product. As indicated earlier, this product comprises a computer readable storage medium, which has program instructions embodied therewith. The program instructions can be executed by processing means of a computerized system 1 as described above, to cause the computerized system to execute several algorithmic iterations as described in reference to the present methods.

The above embodiments have been succinctly described in reference to the accompanying drawings and may accommodate a number of variants. Several combinations of the above features may be contemplated. Examples are given in the next section.

### 2. Particularly preferred embodiments

### 2.1 Preferred architecture

As illustrated in FIG. 1, the Lidars communicate with the *K* processing systems 11, 12, which process the sensor output data to decode 2D grids. Such grids are then locally pre-fused at the processing systems 11, 12, before being passed to the processing system 14, which merges all fused grids. Additional processing systems 15 are used to determine trajectories, e.g., based on a main and auxiliary perceptions, where the auxiliary perception is used to validate trajectories computed from the main perception, as explained in section 1. The validated trajectories are then passed to the DbW system 20 of the vehicle 2, to accordingly steer the latter.

All components of the main system 1 must be suitably synchronized. To that aim, the vehicle 2 may communicate with a backend unit 16, which coordinates all subsystems and components. In particular, the K processing systems 11, 12 and the further processing system 14 can be synchronized according to a networking protocol for clock synchronization.

### 2.2 Preferred flows

FIG. 2A shows high-level steps of a preferred flow. The sensors (e.g., Lidars, as assumed in the following) continually sense S5 portions of the designated area 5, whereby sensor output data are repeatedly sent to processing units 11, 12 of the system 1. At each algorithmic cycle, the processing units 11, 12 receive S10 new datasets corresponding to sensor output data. Such datasets are dispatched S20 to *K* processing systems, whereby each processing system *k* (*k* = 1 to *K*) receives *Nₖ* datasets and processes S30 them to obtain Mₖ occupancy grids, where 1 ≤ *Nₖ* ≤ *Mₖ.* As noted in section 1, some of the datasets might be discarded at step S30. E.g., the first system processes *N*₁ datasets to obtain *M*₁ occupancy grids, the second system processes *N*₂ datasets to obtain *M*₂ occupancy grids, etc. Next, each processing system *k* locally fuses the *Mₖ* grids obtained and timestamp them, step S40. Thus, *K* fused occupancy grids are obtained, which are collected and forwarded S50 to a further processing system 14.

The processing system 14 merges S60 the *K* fused occupancy grids to form a global occupancy grid, which is then suitably timestamped at the system 14. Next, the further processing system 14 identifies S70 cells in the "unknown" state (typically occluded cells) and attempts to refine such states based on cell histories, using cell memory values, as explained in section 1. I.e., cell memory values are updated S80 in parallel, based on the cell states determined last, using a forgetting mechanism.

The vehicle trajectory is determined (or updated) at step S90, e.g., using one or more downstream processing systems. The determined trajectory is then forwarded S100 to the DbW system 20 of the vehicle 2, to accordingly steer the latter. The process loops back to step S10, thereby starting a new iteration based on new sensor output data. Such algorithmic iterations are executed at an average frequency that is between 5 and 20 hertz, typically equal to 10 hertz. This requires efficient computations and data transmissions, hence the benefits of the approach of FIGS. 1, 2A, and 2B. In a parallel loop, the state of the vehicle 2 is updated S110 by reconciling states as obtained from the global occupancy grid and odometry signals from the vehicle. The vehicle state obtained can then be used to determine/update S90 a subsequent trajectory.

FIG. 6 illustrates an example of application, where use is made of sensor measurements from Lidars 110 - 140 to plan (and then repeatedly update) a vehicle trajectory T for an automated car 2 and automatically drive this car to a given parking place P in a parking lot 5. Care should be taken not to collide with any obstacle, including other vehicles 3 already parked in the parking lot.

FIG. 2B shows sub-steps of general step S30 of FIG. 2A. For each dispatched dataset, a processing system accesses S32 a given dataset (i.e., a point cloud model of the environment of the respective Lidar) and processes the dataset to identify characteristics thereof (rays, ray elevation angles, ray projections, hit points, and hit point projections). Then, this processing system initializes S33 state of each cell of a grid (defined in polar coordinates) to the unknown state. The processing system subsequently determines S34 the states of the grid cells, based on the three conditions defined in section 1. To that aim, the processing system iterates S342 - S348 over the rays. I.e., it selects S342 a next ray, assesses S344 the conditions applying to each impacted cell, and modifies S346 the cell states according to the conditions assessed, should such conditions be met. Once all rays have been processed S348, the processing system returns the populated grid.

### 2.3. Preferred backtracing algorithm

As explained in section 1, embodiments of the present methods iterate over the rays to assess the first condition (based on threshold height *h*₁), the second condition (based on threshold height *h*₂), and the further condition (based on minimal elevation angles). Preferred algorithms will attempt to find, for each cell, the highest hit point and set the elevation angle of this hit point as a minimal elevation angle for all outer cells (larger radius, same azimuth), if only to ensure that no ray reaching under a vehicle can set cells within a vehicle's area to a free state.

Because some vehicles happen to substantially deflect lidar rays, the point cloud of the vehicle can be sparse. To avoid free cells within the vehicle, heuristics can be implemented to infer the state of neighbouring cells (in the 2D plane parallel to the ground) based on states of any hit cell. I.e., not only a hit point can be used to determine the state of cells on the path of the corresponding ray projection but, in addition, it can be used to infer the state of lateral cells (along neighbouring azimuths). Such a correction heuristic can be propagated from one azimuth to the next to improve the accuracy of the cell states.

### 2.4. Temporality and timestamp management

A preferred implementation is one in which all sensor measurements are provided with timestamps, which correspond to the sensor measurement times. If several measurements from different sources (e.g., Lidars) are used, the oldest measurement time of all considered inputs is set as a measurement time in the outgoing data. This procedure makes it possible to keep track of the oldest time associated with the information considered at any point in the chain. This way, it is possible to determine the maximum time at which the system must be transferred to a safe state throughout the entire processing chain.

For example, the measurement time of the any point cloud can be sent to each voting system. At the prefusion stage, the oldest measurement time is set as an effective measurement time, as described earlier. Since there is no clear definition of a reference time for a grid map, the average of all input measurement times is used to set the reference time for the grid map. Grid maps with a measurement age above 150 ms are discarded in order to avoid fusing obsolete information, something that would invalidate the entire grid map. In the global grid map generator, the same logic is applied as in the prefusion.

### 3. Technical implementation details

Computerized devices can be suitably designed for implementing embodiments of the present invention as described herein. In that respect, it can be appreciated that the methods described herein are non-interactive, i.e., automated, although human input may be required in certain cases, e.g., should an anomaly or emergency be detected. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, each processing system 11, 12, 14, 15 unit is preferably mapped onto one or more respective sets of processors or, even, one or more respective computers. In particular, the system 15 may typically involve several processors or computers.

A suitable computer will typically include at least one processor and a memory (possibly several memory units) coupled to one or memory controllers. Each processor is a hardware device for executing software. The processor, which may in fact comprise one or more processing units (e.g., processor cores), can be any custom made or commercially available processor, likely subject to some certification.

The memory typically includes a combination of volatile memory elements (e.g., random access memory) and nonvolatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors.

The methods described herein shall typically be in the form of executable program, script, or, more generally, any form of executable instructions.

In exemplary embodiments, each computer further includes a network interface or a transceiver for coupling to a network (not shown). In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer, to communicate data to and from the memory and/or the storage unit (e.g., a hard drive and/or a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forwards such instructions for storage in a computer readable storage medium interfaced with the processing means. All computers and processors involved can be synchronized using any suitable protocol (e.g., NTP) or thanks to timeout messages.

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerized systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in a reverse order, depending on the functions involved and the algorithm optimization retained. It is also reminded that each block and combinations thereof can be adequately distributed among special purpose hardware components.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, several architecture variants may be contemplated for the processing system 15, which involves one or more distinct computers.

## Claims

1. A computer-implemented method of steering an automated vehicle (2) on a ground of a designated area (5) using a set of one or more offboard sensors (110 - 140), each being a 3D laser scanning Lidar, the method comprising repeatedly executing algorithmic iterations, wherein each iteration of the algorithmic iterations comprises:
obtaining (S30), for each sensor of the one or more offboard sensors, a grid, which is a 2D occupancy grid of cells reflecting a perception of said each sensor, by
accessing (S32) a dataset capturing a point cloud model of an environment of said each sensor and processing the dataset to identify characteristics of rays (*R*ᵢ) emitted by said each sensor, the characteristics including hit points *(HPᵢ)* of the rays, as well as projections (*RPᵢ, PPᵢ*) of the hit points and the rays on a plane (*G*) corresponding to the ground, and
determining (S34) a state of each cell of the cells based on the identified characteristics, whereby, given a first height (*h*₁) above the plane and a second height (*h*₂) above the first height,
a necessary and sufficient condition for said each cell to be in an occupied state is to be matched by a projection of a hit point located above the first height, and
a necessary condition for said each cell to be in a free state is to be crossed by a projection of an overhanging ray that has dropped below the second height when passing over said each cell; and
determining (S40 - S80), based on the grid obtained for said each sensor, a trajectory for the automated vehicle (2) and forwarding the determined trajectory to a drive-by-wire system (20) of the automated vehicle (2).

2. The method according to claim **1,** wherein, at said each iteration,
the grid obtained (S30) for each sensor is defined according to a polar coordinate system, a pole of which corresponds to a location of said each sensor, whereby said each cell is defined by a given radius and a given azimuth, and
at determining (S34) the states of the cells, a further condition is applied to said each cell for it to be in a free state, should this cell be an outer cell on a same azimuth and at a larger radius than an inner cell that is matched by a projection of an inner hit point of a reference ray, whereby no overhanging ray is allowed to set the outer cell in a free state if this overhanging ray has already passed below the inner hit point when passing over the outer cell.

3. The method according to claim **2,** wherein
the identified characteristics further include elevation angles of the rays, and
said further condition is enforced by comparing (S34) an elevation angle of said overhanging ray with an elevation angle of said reference ray, whereby the elevation angle of the overhanging ray must be larger than the elevation angle of the reference ray to be allowed to set the outer cell in a free state.

4. The method according to any one of claims **1** to **3,** wherein
the state of each of the cells can be a free state, an occupied state, or an unknown state, obtaining (S30) the grid for each sensor further comprises initializing (S31) each of the cells to the unknown state,
determining (S34) the state of each cell comprises iterating over each ray of the rays identified as parts of the identified characteristics to infer a state of each of the cells that is impacted by said each ray.

5. The method according to any one of claims **1** to **4,** wherein
the set of one or more offboard sensors comprises *N* sensors (110 - 140), *N ≥* 2, located at distinct positions in the designated area (5), such that *N* grids are obtained, which overlap at least partly, and
determining said trajectory further comprises fusing data from the *N* grids obtained, whereby the trajectory is determined based on the fused data.

6. The method according to claim **5,** wherein the method further comprises, prior to fusing said data,
converting each of the *N* grids into a cartesian grid, which is defined in a cartesian coordinate system and has rectangular cells, so that at least some of the rectangular cells of any one of the *N* grids coincide with cells of a distinct one of the *N* grids.

7. The method according to claim **5** or **6,** wherein the *N* grids are obtained by
dispatching (S20) sensor data to *K* processing systems (11, 12), whereby each processing system *k* of the *K* processing systems receives *Nₖ* datasets of the sensor data as obtained from *Nₖ* respective sensors of the set (10) of *N* offboard sensors (110 - 140), where *k* = 1 to *K, K* ≥ 2, *Nₖ* ≥ 2 b' *k,* and*N= Σₖ Nₖ,* and
processing (S30), at said each processing system *k,* the *Nₖ* datasets received to obtain *Mₖ* occupancy grids corresponding to perceptions from *Mₖ* respective sensors of the offboard sensors, respectively, *Nₖ* ≥ *Mₖ* ≥ 1, wherein the *Mₖ* occupancy grids overlap at least partly.

8. The method according to claim **7,** wherein fusing the data from the *N* grids comprises:
fusing (S40), at said each processing system *k,* data from the *Mₖ* occupancy grids obtained to form a fused occupancy grid, whereby *K* fused occupancy grids are formed by the *K* processing systems (11, 12), respectively;
forwarding (S50) the *K* fused occupancy grids to a further processing system (14); and merging (S60), at the further processing system (14), the *K* fused occupancy grids to obtain a global occupancy grid for the designated area (5).

9. The method according to claim **8,** wherein
the *Nₖ* datasets received at said each iteration by said each processing system *k* are respectively associated with *Nₖ* first timestamps, and
said each iteration further comprises:
assigning (S40) *K* second timestamps to the *K* fused occupancy grids, where each of the *K* second timestamps is equal to an oldest of the *Nₖ* first timestamps associated with the *Nₖ* datasets as processed at said each processing system *k*; and
assigning (S60) a global timestamp to the global occupancy grid, where the global timestamp is obtained as an oldest of the *K* second timestamps, and
said trajectory is determined (S90) in accordance with the global timestamp.

10. The method according to claim **9,** wherein
processing (S30) the *Nₖ* datasets at said each processing system *k* further comprises discarding any of the *Nₖ* datasets that is older than a reference time for the *Nₖ* datasets by more than a predefined time period, the latter preferably equal to 150 ms, whereby *Mₖ* is at most equal to *Nₖ,* and
the reference time is computed as an average of the *Nₖ* timestamps.

11. The method according to any one of claims **1** to **10,** wherein
the first height is between 3 and 8 cm, preferably equal to 5 cm, while the second height is between 12 and 30 cm, preferably equal to 20 cm, and
each of the first height and the second height is measured with respect to said plane.

12. The method according to any one of claims **1** to **11,** wherein
each of said sensors is configured to scan its surroundings by emitting rays at constant angles, the latter separated by at most one degree of angle in an elevation plane transverse to said plane, and,
preferably, said constant angles span a range of at least 30 degrees of angle in said elevation plane.

13. The method according to any one of claims **1** to **12,** wherein
said several algorithmic iterations are executed at an average frequency that is between 5 and 20 hertz, preferably equal to 10 hertz.

14. The method according to any one of claims **1** to **13,** wherein
at least one of said sensors, preferably each of said sensors, is located at a height that is between 1.9 m and 5 m, more preferably between 1.9 m and 3 m, this height measured with respect to said plane.

15. A computer program product for steering an automated vehicle (2) in a designated area (5), the computer program product comprising a computer readable storage medium having program instructions embodied therewith, the program instructions executable by processing means of a computerized system, to cause the computerized system to repeatedly execute several algorithmic iterations, each comprising:
obtaining (S30), for each sensor of the one or more offboard sensors, a grid, which is a 2D occupancy grid of cells reflecting a perception of said each sensor, by
accessing (S32) a dataset capturing a point cloud model of an environment of said each sensor and processing the dataset to identify characteristics of rays (*Rᵢ*) emitted by said each sensor, the characteristics including hit points (*HPᵢ*) of the rays, as well as projections (*RPᵢ, PPᵢ*) of the hit points and the rays on a plane (*G*) corresponding to the ground, and
determining (S34) a state of each cell of the cells based on the identified characteristics, whereby, given a first height (*h*₁) above the plane and a second height (*h*₂) above the first height,
a necessary and sufficient condition for said each cell to be in an occupied state is to be matched by a projection of a hit point located above the first height, and a
necessary condition for said each cell to be in a free state is to be crossed by a projection of an overhanging ray that has dropped below the second height when passing over said each cell; and
determining (S40 - S80), based on the grid obtained for said each sensor, a trajectory for the automated vehicle (2) and forwarding the determined trajectory to a drive-by-wire system (20) of the automated vehicle (2).

16. A system for steering an automated vehicle (2) in a designated area (5), wherein the system comprises
a set (10) of one or more offboard sensors (110 - 140), each being a 3D laser scanning Lidar, and
one or more processing systems (11, 12, 14), the latter configured to repeatedly execute algorithmic iterations, wherein, in operation, each iteration of the algorithmic iterations comprises:
obtaining (S30), for each sensor of the one or more offboard sensors, a grid, which is a 2D occupancy grid of cells reflecting a perception of said each sensor, by
accessing (S32) a dataset capturing a point cloud model of an environment of said each sensor and processing the dataset to identify characteristics of rays (*Rᵢ*) emitted by said each sensor, the characteristics including hit points (*HPᵢ*) of the rays, as well as projections (*RPᵢ, PPᵢ*) of the hit points and the rays on a plane (*G*) corresponding to the ground, and
determining (S34) a state of each cell of the cells based on the identified characteristics, whereby, given a first height (*h*₁) above the plane and a second height (*h*₂) above the first height,
a necessary and sufficient condition for said each cell to be in an occupied state is to be matched by a projection of a hit point located above the first height, and
a necessary condition for said each cell to be in a free state is to be crossed by a projection of an overhanging ray that has dropped below the second height when passing over said each cell; and
determining (S40 - S80), based on the grid obtained for said each sensor, a trajectory for the automated vehicle (2) and forwarding the determined trajectory to a drive-by-wire system (20) of the automated vehicle (2).
